# EUROPEAN PATENT APPLICATION

(11) **EP 1 959 592 A2**
(43) Date of publication of application: **20.08.2008**
(21) Application number: 08002934.1
(22) Date of filing: 18.02.2008
(51) Int. Cl.: H04H 20/28

(54) **Apparatus and method for receiving broadcast in a digital broadcasting system**

(30) Priority: 16.02.2007 KR 20070016810
(71) Applicant: Samsung Electronics Co., Ltd., Yeongtong-gu Suwon-si, Gyeonggi-do (KR)
(72) Inventor: Kwon, Yun-Ju, Gyeonggi-do (KR); Kim, Kyeong-Jun, Gyeonggi-do (KR); Oh, Hyun-Seok, Gyeonggi-do (KR); Choi, Sang-Il, Gyeonggi-do (KR)
(74) Representative: Lang, Johannes

(57) **Abstract**

A broadcast reception apparatus for simultaneously receiving multiple channels in a digital broadcasting system is provided. Radio Frequency (RF) processors, the number of which is equal to the number of simultaneously receivable channels, transmit data received from an adjacent RF processor and data simultaneously received from an antenna via one interface pin in regular order. An interface interfaces between the RF processor and a decoder. The decoder simultaneously decodes the data received from the RF processor via the interface into audio and video. A display unit simultaneously displays the data decoded by the decoder.

## Description

### BACKGROUND OF THE INVENTION

### 1. Field of the Invention

The present invention relates generally to a digital broadcasting system, and in particular, to an apparatus and method for receiving broadcasts in a digital broadcasting system.

### 2. Description of the Related Art

In general, broadcast services are offered, aiming to support all users carrying a terminal capable of receiving broadcast services. Such broadcast services are classified into an audio broadcast service such as the radio broadcast for providing only the voice service, a video broadcast service such as the television broadcast for providing voice and video services, and a multimedia broadcast service including voice, video and data services. With the rapid progress of technologies, the broadcast services, which are generally based on the analog scheme, are now changing to digital broadcast services. In addition, the broadcast services are evolving into various schemes such as a scheme that supports a wire network-based multimedia service for providing high-quality, high-speed data by wire and a satellite-based multimedia service for providing high-quality, high-speed data using the satellite, and a scheme based on both the wire and the satellite, beyond the existing transmission tower-based scheme.

Digital Multimedia Broadcast (DMB) is one of the foregoing schemes, commercialization of which has recently been speeded up. DMB, stemmed from Digital Audio Broadcasting (DAB), is based on European Research Coordination Agency progect-147 (Eureka-147) which is the technical standard of DAB now in service in Europe. Therefore, the term 'DMB service' as used herein may include the DAB service. The DMB service can be roughly classified into satellite DMB for providing services using the satellite, and terrestrial DMB for providing services using base stations. The satellite DMB uses a transmission scheme of multiplexing data by Code Division Multiplexing (CDM) for channel separation. However, the terrestrial DMB uses a transmission scheme of multiplexing data by Orthogonal Frequency Division Multiplexing (OFDM) for channel separation.

OFDM is a transmission scheme that converts a serial input symbol stream into parallel symbol streams, and then modulates each of them using a plurality of orthogonal subcarriers. The OFDM system, compared to the single carrier modulation scheme, is robust against the frequency selective multipath fading channel. Particularly, the OFDM system attaches a Cyclic Prefix (CP) symbol, a copy of the rear part of an OFDM symbol, to the front of each OFDM symbol before transmission, thereby canceling Inter-Symbol Interference (ISI) from the previous symbol. In the OFDM system, since multiple broadcast transmitters can constitute a Single Frequency Network (SFN) using the OFDM scheme, the OFDM system can be considered to be suitable for broadcast services.

Due to such advantages, several bills for providing terrestrial DMB broadcast services have been prepared in South Korea, and the bills have prepared a plan to increase the public profit by providing the terrestrial DMB broadcast services on a free-of-charge basis. By doing so, anyone, who is equipped with the equipment by which he/she can view broadcast, can view high-quality programs.

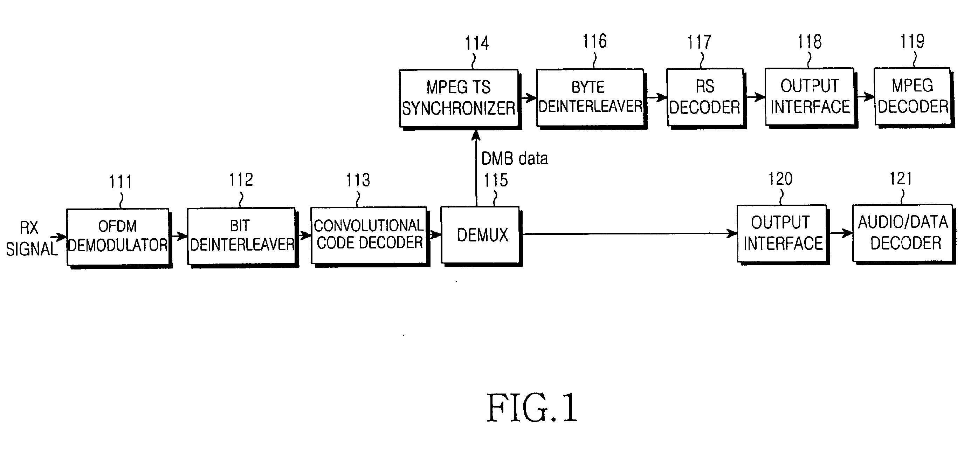

A terminal for receiving the terrestrial DMB broadcast service will be described with reference to FIG. 1.

FIG. 1 is a block diagram illustrating a structure of a general terrestrial DMB reception apparatus.

A terminal supporting the terrestrial DMB service receives a terrestrial DMB-based radio signal (hereinafter referred to as a 'terrestrial broadcast signal') delivered over the sky wave, via an antenna (not shown). The terrestrial broadcast signal is received in the form of an OFDM symbol, and input to an OFDM demodulator 111. The OFDM demodulator 111 performs a specific demodulation operation of removing a guard interval from the received OFDM symbol and performing Fast Fourier Transform (FFT) on the guard interval-removed OFDM symbol. The demodulated terrestrial broadcast signal is input to a bit deinterleaver 112, and the bit deinterleaver 112 deinterleaves the terrestrial broadcast signal received from the OFDM demodulator 111 on a bit-by-bit basis, in order to convert a burst error into a random error.

The deinterleaved terrestrial broadcast signal, as it is a convolutional-coded signal, is input to a convolutional code decoder 113. The convolutional code decoder 113 performs error correction on the received deinterleaved terrestrial broadcast signal, and outputs the error-corrected terrestrial broadcast signal to a demultiplexer 115. The demultiplexer 115 demultiplexes the error-corrected terrestrial broadcast signal received from the convolutional code decoder 113 into an audio/data signal and a Moving Picture Expert Group (MPEG) signal. The audio/data signal is input to an audio/data decoder 121 via an output interface 120, and the audio/data decoder 121 restores the terrestrial broadcast service provided in digital audio, and provides the restored terrestrial broadcast service to the terminal user.

The MPEG signal is input from the demultiplexer 115 to an MPEG Transport Stream (TS) synchronizer 114. The MPEG TS synchronizer 114 searches for specific code information (e.g., 0x47) periodically included in header information of an MPEG TS, to acquire synchronization. An output of the MPEG TS synchronizer 114 is input to a byte deinterleaver 116, and the byte deinterleaver 116 deinterleaves the convolutional-decoded MPEG signal on a byte-by-byte basis, and outputs the deinterleaved MPEG signal to a Reed-Solomon (R-S) decoder 117. The R-S decoder 117 recovers an error signal in the deinterleaved MPEG signal using parity data, and then outputs the error-recovered MPEG signal to an MPEG decoder 119 via output interface 118. The MPEG decoder 119 restores broadcast service from the MPEG signal, and provides the restored broadcast service to the terminal user.

In the modulation/demodulation method (OFDM) of the terrestrial DMB, unlike in the modulation/demodulation method (CDMA) of the satellite DMB, in order to support multiple channels, Radio Frequency (RF) stages and channel decoder stages should be provided independently, the number of each of which is equal to the number of channels that the user desires to simultaneously view. Further, in order to simultaneously display a required number of multiple channels on the screen, connection devices should also be supported simultaneously, the number of which is equal to the number of simultaneously receivable channels, to deliver the data output from each multi-channel decoder to its associated audio/video decoder.

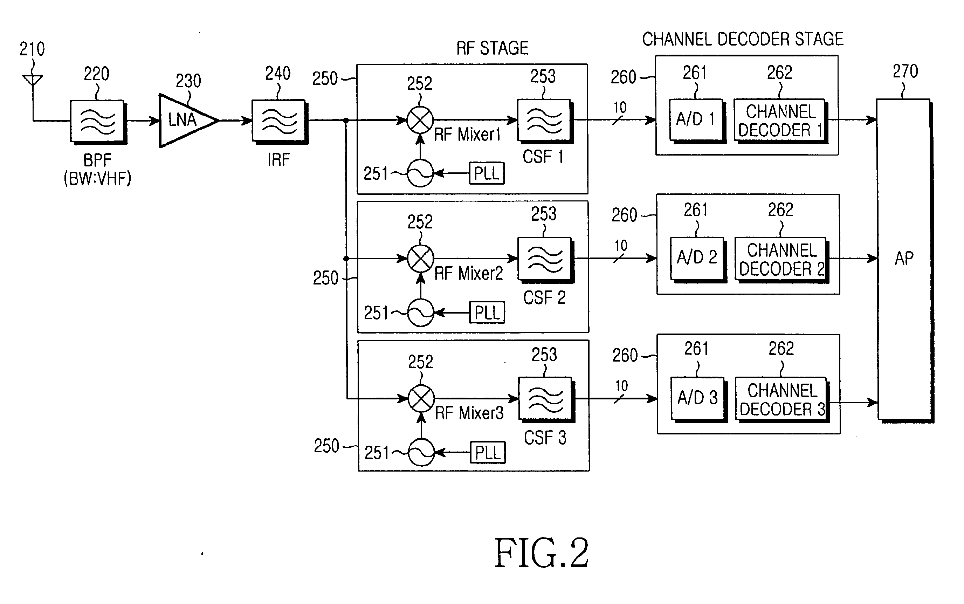

FIG. 2 is a diagram illustrating a structure of a receiver supporting 3-channel simultaneous reception. The receiver of FIG. 2 includes independent RF stages 250 and channel decoder stages 260, the number of each of which is equal to the number of channels that the user desires to simultaneously view.

The receiver has one antenna 210, a terrestrial 6-MHz Band Pass Filter (BPF) 220, an external Low Noise Amplifier (LNA) 230, and an Image Rejection Filter (IRF) device 240 necessary for Low Intermediate Frequency (IF) configuration, all of which are realized outside the chip.

The RF stage 250 includes 3 Voltage Controlled Oscillators (VCOs) 250, 3 mixers 252, and 3 Channel Selection Filters (CSFs) 253.

The channel decoder stage 260 includes Analog-to-Digital Converters (ADCs) 261. For Low-IF configuration, 3 ADCs are provided, and for Zero-IF configuration, 6 ADCs are provided. The ADCs 261 convert analog signals into digital signals. The converted digital signals simultaneously undergo decoding in channel decoders 262, and then, are transferred to an audio/video decoder (or Application Processor (AP)) 270 where they are displayed on the screen. The terms 'AP' and 'audio/video decoder' will be used herein in the same meaning.

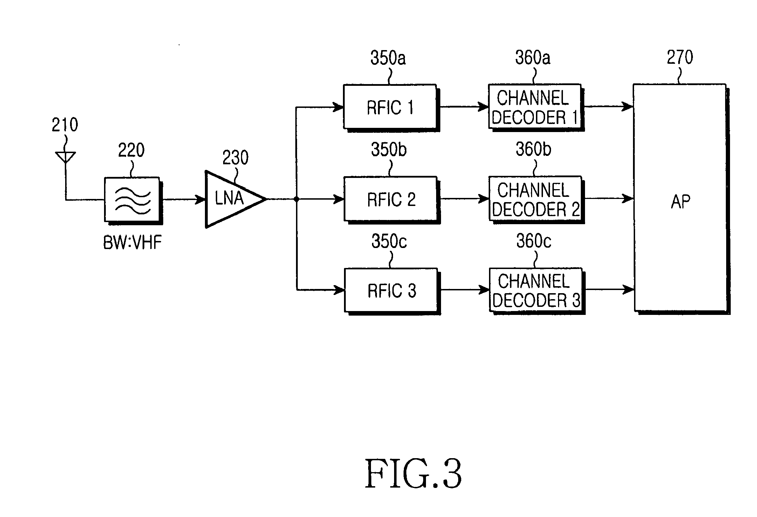

To meet the increasing consumer's demand for simultaneously receiving multiple channels and viewing videos broadcasted from several broadcasting stations on one display, there is a need for a broadcast receiver capable of simultaneously receiving multiple channels. To this end, there is provided a receiver, which is constructed with separate chips and can simultaneously receive 3 channels, as shown in FIG. 3. However, in the terrestrial DMB, manufacturing of a terminal for simultaneously receiving multiple channels is inefficient, so its attempt is not made for the following reasons. That is, in order to simultaneously receive multiple channels by OFDM which is the modulation scheme of the terrestrial DMB, there is a need for a plurality of RF stages and a plurality of channel decoder stages, and when they are applied to a portable terminal, their occupation size and the device cost increase, causing a decrease in the product quality.

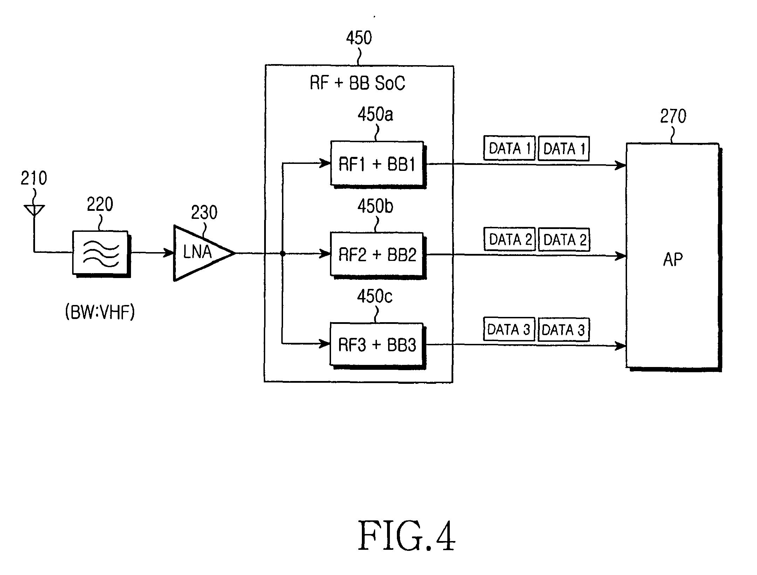

Recently, however, as the RF Complementary Metal-Oxide Semiconductor (CMOS) technology is universalized, a chip has been developed using a Radio Frequency + BaseBand System on Chip (RF+BB SoC) superfine process. Such chip can solve both the large-size problem and the high-cost problem. A structure of such a receiver is illustrated in FIG. 4.

FIG. 4 is a diagram illustrating a structure of a 3-channel simultaneous reception receiver made up of one chip.

All reception chips simultaneously supporting multiple channels can be constructed in one chip. Before manufacturing of the terminal, the required number of simultaneously receivable channels should be properly determined. However, when there is a change in the consumer's demand for the required number of simultaneously receivable channels, this chip cannot rapidly cope with the change. For example, after the chip development is completed so that the chip can simultaneously receive 2 channels, if there is a need to support 3-channel simultaneous reception at the commercialization time, a new chip must be developed. On the contrary, if the consumers tend to require only 2 channels or more at the time the chip development capable of 3-channel simultaneous support is completed, the terminal developer will develop the terminal using the chip supporting 3 channels. In this case, the chip cost increases, causing an increase in the terminal price and thus causing a loss of competitive power. Another problem in FIGs. 3 and 4 consists in an interface method of delivering necessary data to the audio/video decoder, for multi-channel simultaneous reception. When interfaces, the number of which is equal to the number of channels, are used, the number of pins increases, and the increase in the number of pins causes an increase in the package size. In addition, even the interference to other pins, especially to RF-related pins, caused by the simultaneously enabled clocks, can not be disregarded.

In addition, as the number of simultaneously receivable channels increases, performance of the audio/video decoder for processing them should be improved. Generally, in the terrestrial DMB, the audio/video decoder should process 30 frames per second (in case of Common Intermediate Format (CIF)) in order to preview one broadcast. For 3 channels, the audio/video decoder should simultaneously process 90 frames. Actually, however, it is difficult to find an audio/video decoder capable of processing 90 frames, and the excessive consumption power of the audio/video decoder, if any, considerably reduces the available viewing time, causing dissatisfaction of the consumers. The currently available audio/video decoder can process a maximum of 60 frames per second, which is the limit of 3-channel simultaneous viewing. That is, it is general that for screen configuration, 30 frames are allocated to the main channel and 15 frames are allocated to each of two sub-channels. However, regarding the purpose of the multi-channel simultaneous reception, the user uses the multi-channel simultaneous reception in major cases to acquire preliminary information for selecting channels, and uses the multi-channel simultaneous reception in minor cases to continuously view multiple channels. That is, the common consumers require to rapidly switch channels while viewing multiple channels, rather than to secure the time for the multi-channel simultaneous viewing.

Making an analysis in terms of consumption power, when the user continuously views multiple channels, the audio/video decoder should simultaneously process several channels. In this case, its internal processor should increase in the processing speed, causing an increase in the consumption power.

### SUMMARY OF THE INVENTION

An aspect of the present invention is to address at least the problems and/or disadvantages and to provide at least the advantages described below. Accordingly, an aspect of the present invention is to provide a reception apparatus and method for reducing a channel switching time in a multi-channel simultaneous reception mode in a terrestrial DMB receiver of a digital broadcasting system.

Another aspect of the present invention is to provide a reception apparatus and method for reducing consumption power in a multi-channel simultaneous reception mode in a terrestrial DMB receiver of a digital broadcasting system.

According to one aspect of the present invention, there is provided a broadcast reception apparatus for simultaneously receiving multiple channels in a digital broadcasting system. The broadcast reception apparatus includes Radio Frequency (RF) processors, the number of which is equal to the number of simultaneously receivable channels, for transmitting data received from an adjacent RF processor and data simultaneously received from an antenna via one interface pin in regular order; an interface for interfacing between the RF processor and a decoder; the decoder for simultaneously decoding the data received from the RF processor via the interface into audio and video; and a display unit for simultaneously displaying the data decoded by the decoder.

According to another aspect of the present invention, there is provided a broadcast reception method for simultaneously receiving multiple channels at a Radio Frequency (RF) processor in a digital broadcasting system. The broadcast reception method includes: upon receiving a request for a Picture in Picture (PIP) mode from a terminal user, determining whether at least one of RF processors, the number of which is equal to the number of simultaneously receivable channels, is a first master having an interface mastership; when the at least one of RF processors is a first master, acquiring a bus mastership by the RF processor; when there is data to transmit, transmitting the transmission data and data received from an adjacent RF processor using a Time Division Multiplexing (TDM) scheme; and when the transmission is completed, transferring the interface mastership to a next RF processor.

### BRIEF DESCRIPTION OF THE DRAWINGS

The above and other aspects, features and advantages of the present invention will become more apparent from the following detailed description when taken in conjunction with the accompanying drawings in which:
FIG. 1 is a block diagram illustrating a structure of a general terrestrial DMB reception apparatus;
FIG. 2 is a diagram illustrating a structure of a receiver supporting 3-channel simultaneous reception;
FIG. 3 is a diagram illustrating a structure of a 3-channel simultaneous reception receiver made up of separate chips;
FIG. 4 is a diagram illustrating a structure of a 3-channel simultaneous reception receiver made up of one chip;
FIG. 5 is a diagram illustrating a structure of a reception apparatus in a digital broadcasting system according to an embodiment of the present invention;
FIG. 6 is a diagram illustrating a structure of a reception apparatus in a digital broadcasting system using one interface pin according to an embodiment of the present invention;
FIG. 7 is a diagram illustrating a receiver supporting a multi-channel simultaneous reception mode and a screen of the receiver;
FIG. 8 is a diagram illustrating a screen of a receiver supporting a channel switching acceleration mode;
FIG. 9 is a diagram illustrating a structure of a reception apparatus supporting a consumption power reduction mode in a digital broadcasting system according to another embodiment of the present invention;
FIG. 10 is a diagram illustrating an automatic change function for adjacent channels;
FIG. 11 is a diagram illustrating an automatic change function for preferred channels;
FIG. 12 is a flowchart illustrating a method for receiving broadcast in a digital broadcasting system according to an embodiment of the present invention;
FIG. 13 is a flowchart illustrating a method for receiving broadcast in a digital broadcasting system according to another embodiment of the present invention;
FIG. 14 is a flowchart illustrating a method for receiving broadcast in a digital broadcasting system according to an embodiment of the present invention;
FIG. 15 is a flowchart illustrating a data transmission/reception method between RF processors according to an embodiment of the present invention; and
FIG. 16 is a diagram illustrating the chip size reduction effect after application of the present invention.

### DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for clarity and conciseness.

In the digital broadcasting system according to an embodiment of the present invention, the reception apparatus is constructed with an optimal reception chip structure where multi-channel simultaneous reception is possible, and this chip structure can reduce both the consumption power and the channel switching time.

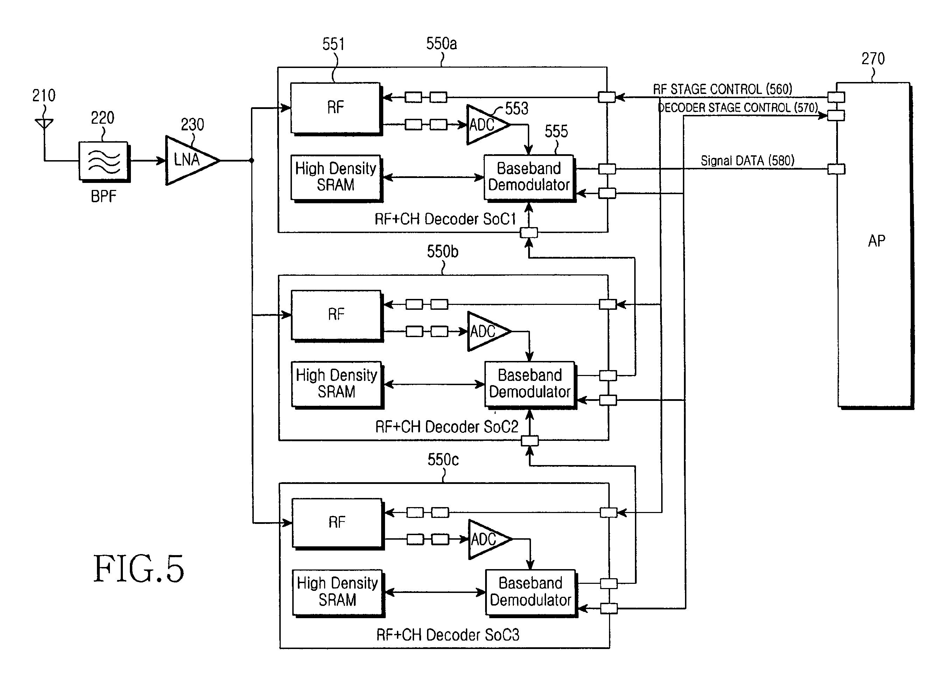

FIG. 5 is a diagram illustrating a structure of a reception apparatus in a digital broadcasting system according to an embodiment of the present invention.

In the digital broadcasting system according to an embodiment of the present invention, the reception apparatus constructs RF stages and channel decoder stages in the SoC chip form using the CMOS technology, as shown in FIG. 5. The RF stages and the channel decoder stages constructed in the SoC chip form using the CMOS technology will be referred to herein as 'RF processors 550a to 550c'. For multi-channel simultaneous reception, RF+BB SoC chips, the number of which is equal to the number of simultaneously receivable channels, are stacked in the System in Package (SiP) form to construct a commercial sample. The SiP is a technology for arranging several integrated circuits in one package to integrate all electronic circuits in a small area. In addition, the SiP is a technology for integrating the devices widely distributed over the circuit substrate to reduce the board space.

An RF processor 550a made up of an RF stage and a channel decoder stage in the SoC chip form using the CMOS technology includes an RF 551, an ADC 553, and a baseband demodulator 555, as shown in FIG. 5.

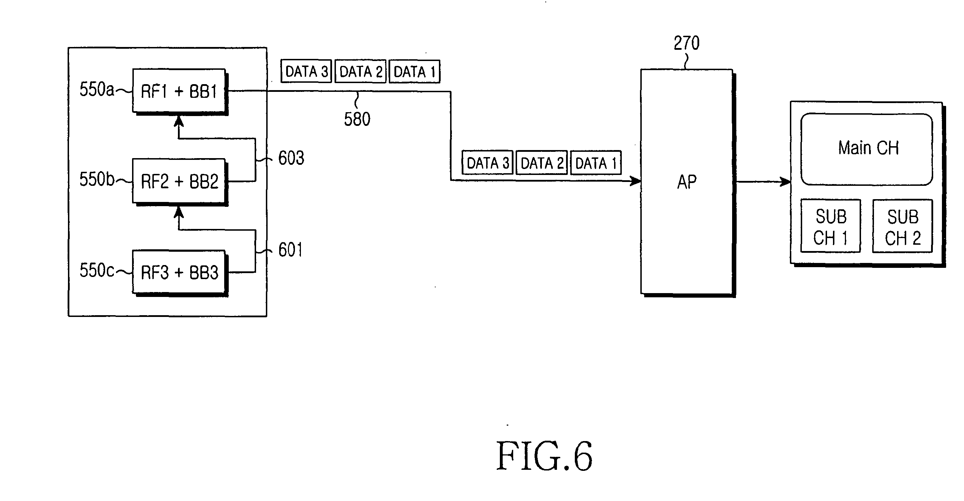

For example, in the case where 3 channels are simultaneously received, when broadcast data simultaneously received via an antenna 210 passes through an RF1+BB1 chip or a first RF processor 550a, first desired broadcast channel data is output; when the received broadcast data passes through a RF2+BB2 chip or a second RF processor 550b, second desired broadcast channel data is output; and when the received broadcast data passes through a RF3+BB3 chip or a third RF processor 550c, third desired broadcast channel data is output. In order for the user to actually view the broadcast screen, the data processed in the front stage or the first RF processor 550a is delivered to the audio/video decoder where the delivered data is transferred to the speaker and the screen after undergoing a process of separating audio signals and video signals. In order for the user to simultaneously view multiple channels, each channel data should be continuously transferred to the audio/video decoder, and this can be realized as illustrated in FIG. 6.

FIG. 6 is a diagram illustrating a structure of a reception apparatus in a digital broadcasting system using one interface pin according to an embodiment of the present invention.

The unique data interface standard should be defined between adjacent RF processors like the RF processor according to an embodiment of the present invention. Therefore, rather than directly outputting the output received from another reception chip to the audio/video decoder, the reception apparatus transfers the received output to an input of the next reception chip, and the received output is delivered again to an input of the final reception chip. Only the reception chip that will interface with the audio/video decoder is connected to the audio/video decoder using one interface pin 580.

That is, an RF processor 550c transfers only data 3 to an RF processor 550b via a first path 601; the RF processor 550b transfers data 2 and data 3 to the RF processor 550a via a second path 603; and the RF processor 550a, which is the final reception chip, transfers data 1, data 2 and data 3 to the audio/video decoder via one interface pin 580.

When the RF processors 550a to 550c are realized according to an the user simultaneously views several channels, the consumption power increases embodiment of the present invention, the user can simultaneously view the channels, the number of which is equal to the number of the RF processors 550a to 550c. However, when and the actual available viewing time decreases. Actually, in most cases, the terminal users achieve the multi-channel simultaneous viewing in order to acquire preliminary information for channel switching, rather than to simply view multiple channels for a long time.

Shown in FIG. 6 is the concept in which the audio/video decoder continuously processes the data simultaneously received over multiple channels, and displays the processed data on the screen.

In the case of FIG. 6, the data processed in the reception apparatus should be transferred to the audio/video decoder at high speed. The data transferred to the audio/video decoder should be simultaneously processed in order to be reproduced as an audio/video signal. In conclusion, a considerable amount of power is consumed in the data interface 580 of FIG. 6 and the audio/video decoder (or AP) 270, causing a reduction in the battery life time. The present invention provides various view modes (multi-channel simultaneous reception mode, channel switching acceleration mode, and consumption power reduction mode) to propose a method for reducing the channel switching time and the consumption power.

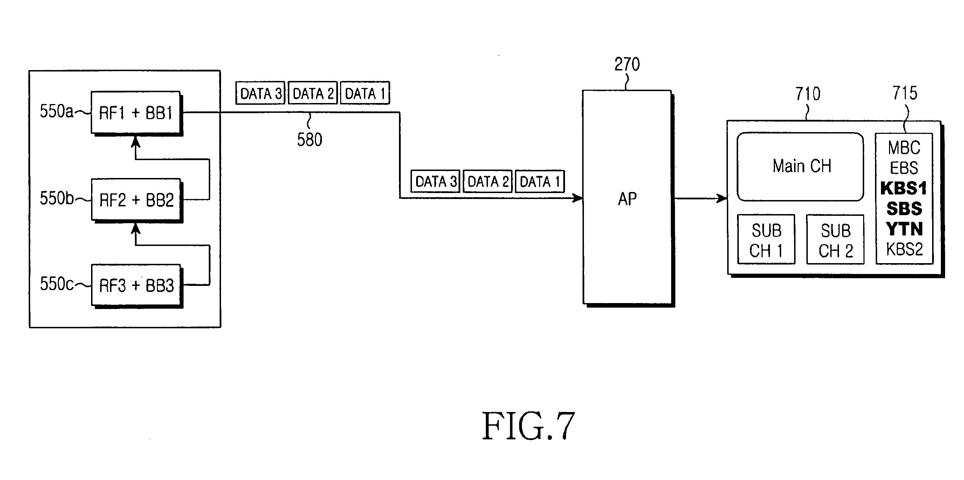

FIG. 7 is a diagram illustrating a receiver supporting a multi-channel simultaneous reception mode and a screen of the receiver.

When data of multiple channels is simultaneously delivered to an AP 270, a display unit 710 can simultaneously display all the channels. The display unit 710 displays fast switchable channels in a channel list 715, and displays the fast switchable channels and non-fast switchable channels in the channel list in different colors to maximize the terminal user's convenience.

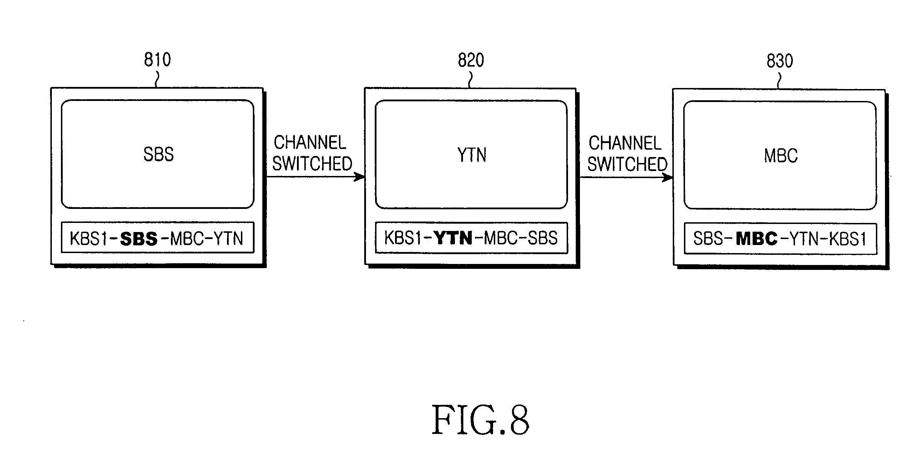

FIG. 8 is a diagram illustrating a screen of a receiver supporting a channel switching acceleration mode.

The terminal user uses the channel switching acceleration mode when there is a demand for fast switching to another channel by displaying adjacent channel information while selecting and viewing only a particular channel in the multi-channel simultaneous reception mode. As shown in FIG. 8, a display unit 810 prepares a User Interface (UI) so as to display information on the currently received adjacent channels and their fast switchability. That is, while switching to the highlighted channels (e.g., adjacent channels and preferred channels) can be achieved in real time, switching to the non-highlighted channels needs the existing channel switching time. Because the display units 810, 820 and 830 display information on the fast switchable channels, the receiver provides the terminal user with a way to switch channels without a channel switching delay not only during switching to the adjacent channels and preferred channels but also during switching to the channels included in the fast switchable channel information. For example, in the case where the display unit 810 is presently displaying an SBS (Seoul Broadcasting System) channel, and a KBS1 (Korean Broadcasting System 1) channel and an YTN (Yeonhap Television News) channel are selected as preferred channels, when the user directly switches to a MBC (Moonwha Broadcasting Corporation) channel, he/she may suffer a channel switching delay. However, because the terminal user has the preferred channel information, he/she may switch to the MBC channel via the YTN channel which is a preferred channel, as shown in the display unit 820, rather than directly switching from the SBS channel to the MBC channel, making it possible to smoothly switch channels without interruption. In this mode, like in the multi-channel simultaneous reception mode, not only the data for the main screen but also the data for the adjacent/preferred channel screens are transferred to the AP 270 where they undergo audio/video decoding.

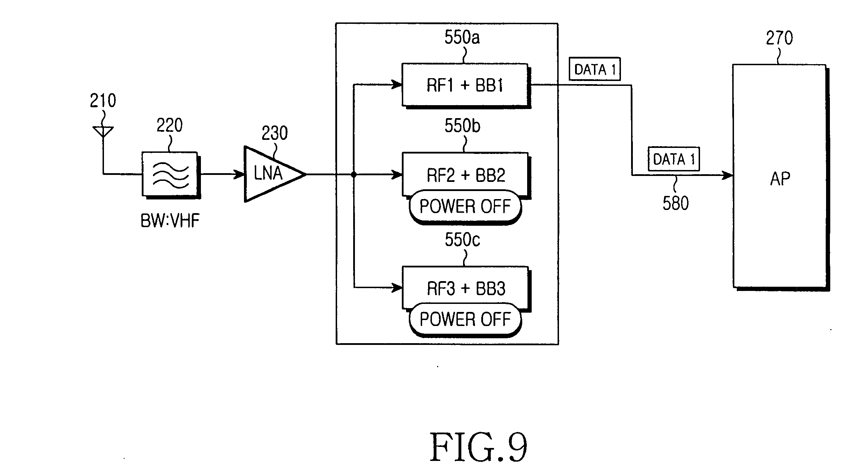

FIG. 9 is a diagram illustrating a structure of a reception apparatus supporting a consumption power reduction mode in a digital broadcasting system according to another embodiment of the present invention.

Another embodiment of the present invention adds a function capable of automatically reducing consumption power after a lapse of a predetermined time in the multi-channel simultaneous reception mode or the channel switching acceleration mode. This mode mainly aims to reduce the consumption power at the sacrifice of the time for channel switching. Because it is general that the terminal user views only one channel for a specific time after completion of the channel switching, the reception apparatus, after a lapse of a predetermined time, keeps only the selected channel and closes the remaining sub-channels on the screen. In this case, the RF processors 550b and 550c of FIG. 9, associated with the sub-channels, in the channel decoder stages are powered-off (or disabled), contributing to a reduction in the consumption power.

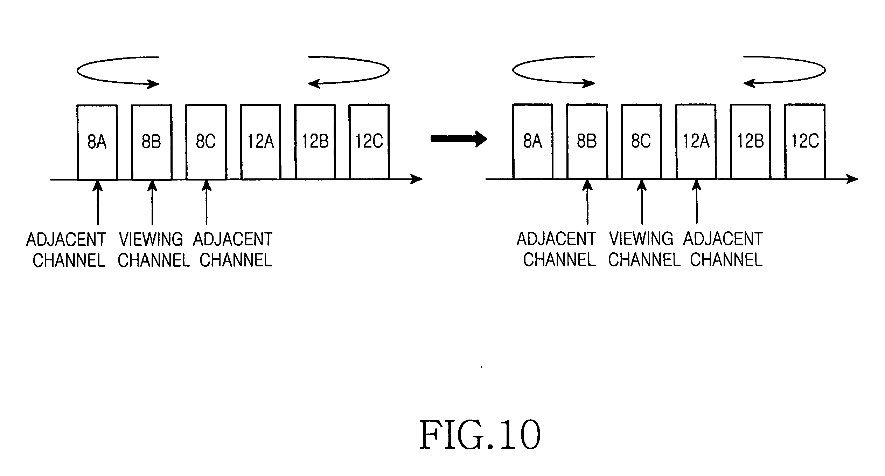

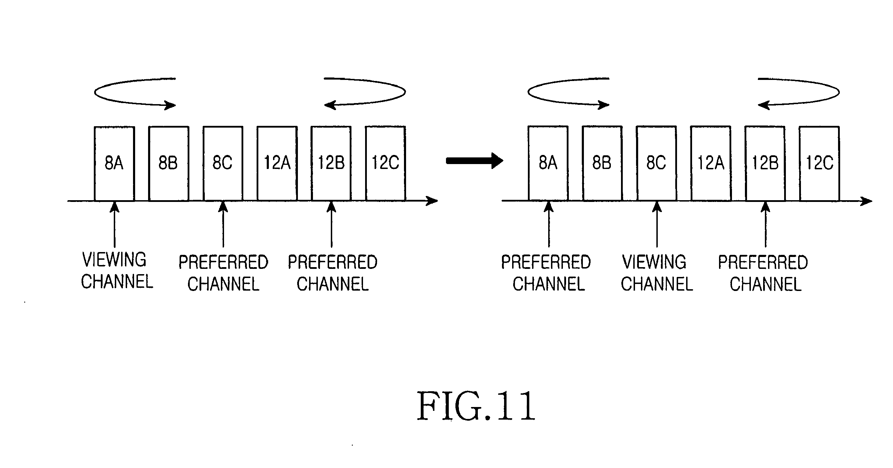

FIG. 10 is a diagram illustrating an automatic change function for adjacent channels, and FIG. 11 is a diagram illustrating an automatic change function for preferred channels.

In FIG. 10, the viewing channel that the user is currently viewing is 8B, and its adjacent channels are 8A and 8C. However, after switching to the adjacent channel 8C is completed, the old adjacent channel 8C changes to a new viewing channel 8C and new adjacent channels of the new viewing channel 8C change to 8B and 12A. That is, when there is a change in the current viewing channel, its adjacent channels are automatically changed.

In FIG. 11, the viewing channel that the user is currently viewing is 8A, and the preferred channels are 8C and 12B. However, after switching to the preferred channel 8C is completed, a new viewing channel changes to the old preferred channel 8C and new preferred channels change to 8A and 12B. That is, when there is a change in the current viewing channel, the preferred channels are automatically changed.

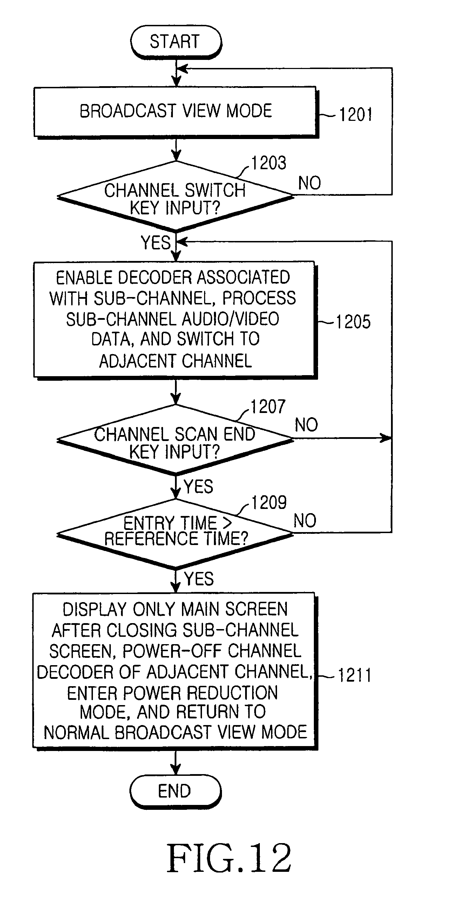

FIG. 12 is a flowchart illustrating a method for receiving broadcast in a digital broadcasting system according to an embodiment of the present invention. Shown in FIG. 12 is a flowchart illustrating a broadcast reception method for the case where a channel switch key is input from the terminal user.

In step 1201, the receiver is in a normal broadcast view mode. In step 1203, the receiver determines whether there is a channel switch key input from the terminal user. If there is no channel switch key input, the receiver keeps the normal broadcast view mode. However, if there is a channel switch key input, the receiver proceeds to step 1205 where it enables RF processors associated with sub-channels as shown in FIGs. 6 and 7, processes sub-channel audio/video data received via one interface pin 580, and switches to the adjacent channel or the preferred channel. A difference between the channel switching acceleration mode and the multi-channel simultaneous reception mode consists only in the way to configure the screen.

Thereafter, in step 1207, the receiver determines whether a channel scan end key is input in the multi-channel simultaneous reception mode and/or the channel switching acceleration mode. If the channel scan end key is not input, the receiver returns to step 1205.

However, when the channel scan end key is input, the receiver determines in step 1209 whether a reduction mode entry time (i.e., a time to enter the consumption power reduction mode due to the absence of the channel switch key for a predetermined time or to a request of the terminal user) is greater than a predetermined reference time.

If the reduction mode entry time is less than or equal to the reference time, the receiver returns to step 1205. However, if the reduction mode entry time is greater than the reference time, the receiver proceeds to step 1211 where it closes the sub-channel screens and displays only the main channel screen. In addition, the receiver powers off the RF processors of the adjacent channels. That is, only the data for the current viewing channel is processed in its associated RF stage, channel decoder stage and audio/video decoder. Thereafter, the receiver enters the consumption power reduction mode, and returns to the normal broadcast view mode.

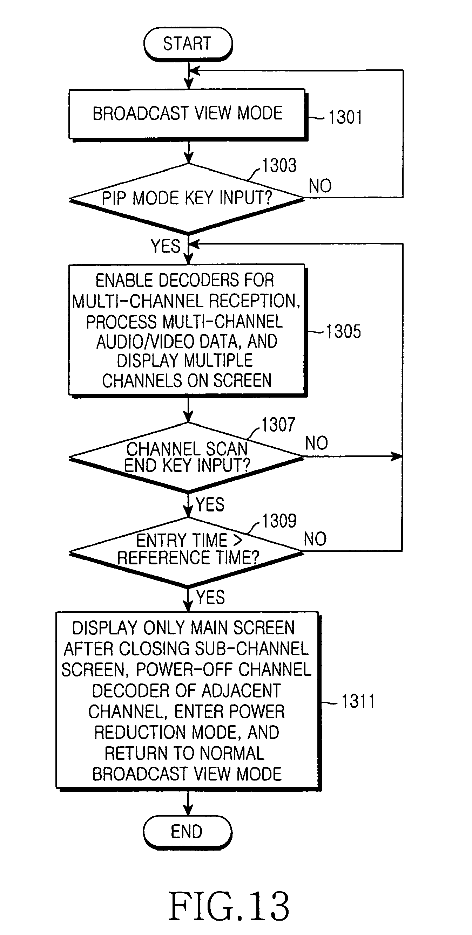

FIG. 13 is a flowchart illustrating a method for receiving broadcast in a digital broadcasting system according to another embodiment of the present invention. Shown in FIG. 13 is a flowchart illustrating a broadcast reception method for the case where a Picture in Picture (PIP) mode key is input from the terminal user.

In step 1301, the receiver is in a normal broadcast view mode. The receiver determines in step 1303 whether a PIP mode key is input from the terminal user. The term 'PIP' refers to a technique for displaying compressed image signals on separate PIP screens horizontally/vertically divided from the main screen. The PIP screens can simultaneously display the main channel and sub-channels different from the main channel, or can simultaneously display image signals from the external video input devices such as Video Cassette Recorder (VCR) and Digital Versatile Disc (DVD), rather than the broadcast signals. Therefore, with the use of the PIP function, the user can view more than two channels at a time, and can also view VCR or DVD while watching TV.

If it is determined in step 1303 that there is no PIP mode key input from the terminal user, the receiver stays in the normal broadcast view mode. However, if there is a PIP mode key from the terminal user, the receiver proceeds to step 1305 where it enables RF processors 550a to 550c of all channels for the multi-channel simultaneous reception, processes multi-channel audio/video data received via one interface pin 580, and displays multiple channels on the screen.

The receiver determines in step 1307 whether a channel scan end key is input in the multi-channel simultaneous reception mode and/or the channel switching acceleration mode. If the channel scan end key is not input, the receiver returns to step 1305.

However, if the channel scan end key is input, the receiver determines in step 1309 whether a reduction mode entry time is greater than a predetermined reference time. If the reduction mode entry time is less than or equal to the reference time, the receiver returns to step 1305.

However, if the reduction mode entry time is greater than the reference time, the receiver proceeds to step 1311 where it closes sub-channel screens and displays only the main screen. In addition, the receiver powers off RF processors of the adjacent channels. That is, only the data for the current viewing channel is processed in its associated RF stage, channel decoder stage and audio/video decoder. Thereafter, the receiver enters the consumption power reduction mode, and returns to the normal broadcast view mode.

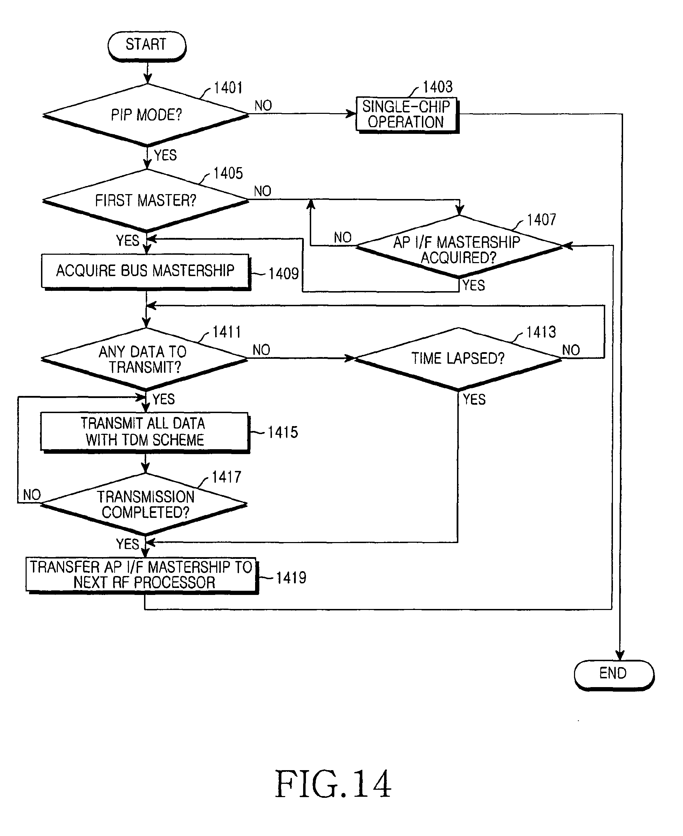

FIG. 14 is a flowchart illustrating a method for receiving broadcast in a digital broadcasting system according to an embodiment of the present invention. Shown in FIG. 14 is a flowchart illustrating an operation of an RF processor.

The RF processor determines in step 1401 whether the current mode is a PIP mode. If the current mode is not the PIP mode, the RF processor performs a single-chip operation in step 1403.

However, if the current mode is a PIP mode, the RF processor determines in step 1405 whether it is a first master. If the RF processor is not the first master, the RF processor determines in step 1407 whether it has an AP Interface (I/F) mastership. The expression 'RF processor has an AP I/F mastership' as used herein means that the RF processor is connected to the AP 270 via one interface pin 580.

If the RF processor has no AP I/F mastership, the RF processor repeats the operation of step 1407 until it has an AP I/F mastership. However, if the RF processor has an AP I/F mastership or if it is determined in step 1405 that the RF processor is a first master, the RF processor acquires a bus mastership in step 1409. Thereafter, the RF processor determines in step 1411 whether there is any data to transmit. If there is no data to transmit, the RF processor determines in step 1413 whether a predetermined time has elapsed. If the predetermined time has elapsed, the RF processor proceeds to step 1419. However, if the predetermined time has not elapsed, the RF processor returns to step 1411.

However, if it is determined in step 1411 that there is data to transmit, the RF processor transmits in step 141 all data to the AP 270 via the interface pin 580 using a Time Division Multiplexing (TDM) scheme. Thereafter, the RF processor determines in step 1417 whether the data transmission is completed. If the data transmission is not completed, the RF processor returns to step 1415. However, if the data transmission is completed, the RF processor transfers its AP I/F mastership to the next RF processor in step 1419.

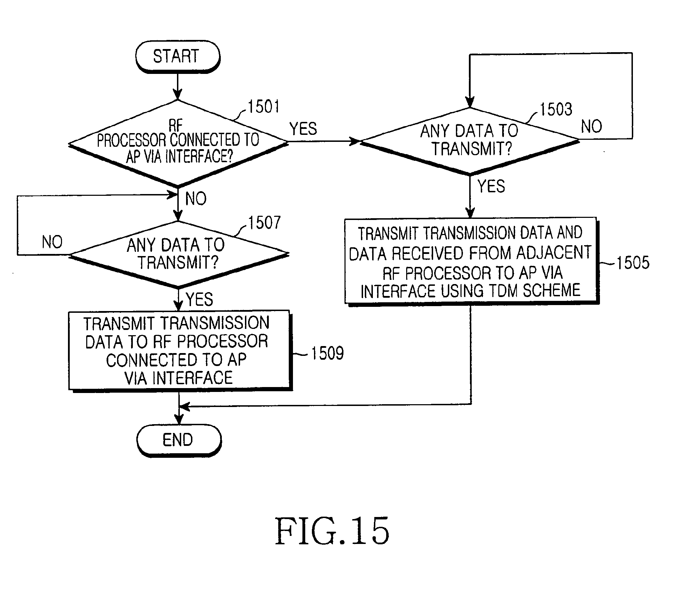

FIG. 15 is a flowchart illustrating a data transmission/reception method between RF processors according to an embodiment of the present invention.

An RF processor determines in step 1501 whether it is an RF processor connected to the AP via an interface pin. If the RF processor is an RF processor connected to the AP via the interface pin, the RF processor determines in step 1503 whether there is any data to transmit. If there is no data to transmit, the RF processor repeats the operation of step 1503 until there is data to transmit. However, if there is data to transmit, the RF processor proceeds to step 1505 where it transfers its own data, i.e., data received via an antenna, and data received from adjacent RF processors to the AP via the interface pin using the TDM scheme.

However, if it is determined in step 1501 that the RF processor is not an RF processor connected to the AP via the interface pin, the RF processor determines in step 1507 whether there is any data to transmit. If there is no data to transmit, the RF processor repeats the operation of step 1507 until there is data to transmit. However, if there is data to transmit, the RF processor transfers the data to the RF processor connected to the AP via the interface pin in step 1509.

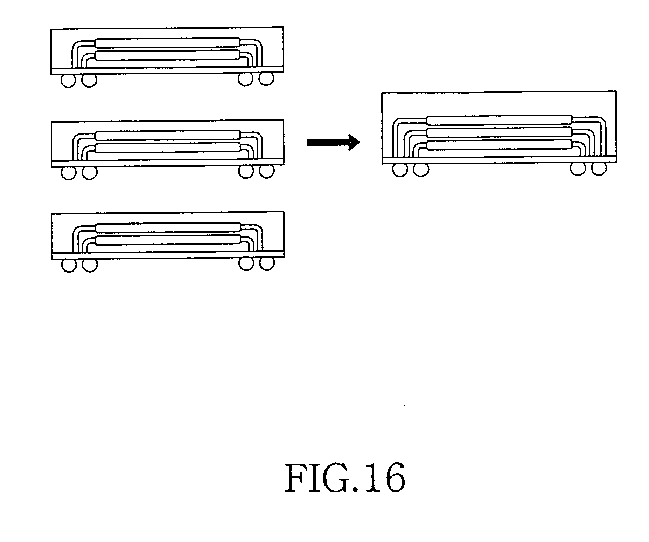

The present invention proposes a reception chip structure supporting multi-channel simultaneous viewing. Compared to the reception chip of FIG. 3, the proposed reception chip reduces to 1/3 in chip size as shown in FIG. 16, and also decreases to 1/3 or more in terms of the cost. FIG. 16 is a diagram illustrating the chip size reduction effect after application of the present invention.

In addition, the reception chip proposed by the present invention, compared with the reception chip of FIG. 4, can meet the time-to-market demand because it can rapidly cope with any possible change in the consumer's demand.

Further, the present invention can solve the problems that after realizing the chip in the SoC form so as to support many channel resources before realization of the reception chip, the terminal developer adds elements when there is a change in the consumer's demand, causing an increase in the device cost.

Moreover, the present invention provides various reception modes in the multi-channel simultaneous reception environment, thereby contributing to an increase in the terminal user's convenience for the channels and a reduction in the channel switching time and the consumption power. It can be appreciated from Table 1 that with the application of the present invention, the channel switching time of the terminal can be reduced from 3 seconds to 0.4 seconds.

**Table 1**

| | | Conventional fastest channel switching condition | Invention applied |
|---|---|---|---|
| Channel switching time | | 3.0 | 0.4 |

| Function | Operation name | | |
|---|---|---|---|
| Key input and switching command delivery | MSM | 0.4 | 0.4 |
| Deinterleaving | Channel decoder | 0.4 | 0 |
| Frequency synch | RF, Channel decoder | 0.6 | 0 |
| MPEG Buffering | A/V decoder | 0.6 | 0 |
| I-FRAME Searching | | 1 | 0 |

Making an analysis on the effect in terms of the consumption power for the case where the terrestrial broadcast is received with the application of the present invention, reference can be made to the actual values in Table 2.

**Table 2**

| | Prior art | Invention |
|---|---|---|
| Operation frequency (MHz) | 200 | 100 |
| AN decoder consumption power (mW) | 200 | 100 |
| RF + Channel Decoder Stage | 300 | 100 |

As is apparent from the foregoing description, the present invention provides various reception modes in the receiver capable of supporting the multi-channel simultaneous reception, thereby contributing to an increase in the terminal user's convenience for the channels. In addition, the present invention can contribute to a reduction in the channel switching time and the consumption power in the receiver capable of the multi-channel simultaneous reception.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A broadcast reception apparatus for simultaneously receiving multiple channels in a digital broadcasting system, the apparatus comprising:
Radio Frequency (RF) processors, the number of which is equal to the number of simultaneously receivable channels, for transmitting data received from an adjacent RF processor and data simultaneously received from an antenna via one interface pin in regular order;
an interface for interfacing between the RF processor and a decoder;
the decoder for simultaneously decoding the data received from the RF processor via the interface into audio and video; and
a display unit for simultaneously displaying the data decoded by the decoder.

2. The broadcast reception apparatus of claim 1, wherein a data interface standard is defined between the RF processors.

3. The broadcast reception apparatus of claim 1, wherein among the RF processors, an RF processor to be interfaced with the decoder is connected to the decoder using one interface pin.

4. The broadcast reception apparatus of claim 1, wherein upon receiving a request for channel switching to an adjacent channel or a preferred channel from a terminal user, an RF processor associated with the adjacent channel or the preferred channel is enabled.

5. The broadcast reception apparatus of claim 1, wherein when a reduction mode entry time is greater than a predetermined reference time, the display unit closes a sub-channel screen and displays a main screen.

6. The broadcast reception apparatus of claim 5, wherein when the reduction mode entry time is greater than the reference time, adjacent RF processors other than the RF processor connected to the interface are powered off.

7. The broadcast reception apparatus of claim 1, wherein upon receiving a request for a multi-channel simultaneous reception mode from a terminal user, RF processors associated with the corresponding multiple channels are enabled to process multi-channel audio/video data.

8. A broadcast reception method for simultaneously receiving multiple channels at a Radio Frequency (RF) processor in a digital broadcasting system, the method comprising:
upon receiving a request for a Picture in Picture (PIP) mode from a terminal user, determining whether at least one of RF processors, the number of which is equal to the number of simultaneously receivable channels, is a first master having an interface mastership;
when the at least one of RF processors is a first master, acquiring a bus mastership by the RF processor;
when there is data to transmit, transmitting the transmission data and data received from an adjacent RF processor using a Time Division Multiplexing (TDM) scheme; and
when the transmission is completed, transferring the interface mastership to a next RF processor.

9. The broadcast reception method of claim 8, further comprising:
when there is no data to transmit, transferring the interface mastership to a next RF processor after a lapse of a predetermined time.

10. A broadcast reception method for simultaneously receiving multiple channels at a Radio Frequency (RF) processor in a digital broadcasting system, the method comprising:
upon receiving a request for a Picture in Picture (PIP) mode from a terminal user, determining whether at least one of RF processors, the number of which is equal to the number of simultaneously receivable channels, is connected to a decoder via an interface;
when the at least one of RF processors is not connected to the decoder via the interface, determining whether there is any data to transmit; and
when there is data to transmit, transmitting the data to an adjacent RF processor connected to the decoder.

11. The broadcast reception method of claim 10, further comprising:
when the at least one of RF processors is connected to the decoder via the interface, determining whether there is any data to transmit; and
where there is data to transmit, transmitting the transmission data and data received from an adjacent RF processor using a Time Division Multiplexing (TDM) scheme.

12. A broadcast reception method for simultaneously receiving multiple channels in a digital broadcasting system, the method comprising:
transmitting, by Radio Frequency (RF) processors, data received from an adjacent RF processor and data simultaneously received from an antenna via one interface pin in regular order, wherein the number of the RF processors is equal to the number of simultaneously receivable channels;
simultaneously decoding the received data into audio and video; and
simultaneously displaying the decoded data.

13. The broadcast reception method of claim 12, further comprising:
upon receiving a request for a multi-channel simultaneous reception mode from a terminal user, displaying fast switchable channels using a channel list.

14. The broadcast reception method of claim 12, further comprising:
upon receiving a request for a channel switching acceleration mode from the terminal user, displaying information on an adjacent channel or an preferred channel and fast switchability thereof.

15. The broadcast reception method of claim 12, further comprising:
when there is no channel switching for a predetermined time, powering-off RF processors other than an RF processor connected to one interface pin.

16. The broadcast reception method of claim 12, further comprising:
upon receiving a request for a multi-channel simultaneous reception mode from a terminal user, processing multi-channel audio/video data by RF processors associated with the corresponding multiple channels.

17. A broadcast reception method for simultaneously receiving multiple channels in a digital broadcasting system, the method comprising:
upon receiving a request for channel switching from a terminal user, enabling an Radio Frequency (RF) processor associated with a channel requested for channel switching by the terminal user, and processing audio/video data associated with the requested channel; and
upon receiving a channel scan end key input from the terminal user, changing a view mode according to a relationship between a reduction mode entry time and a predetermined reference time.

18. The broadcast reception method of claim 17, further comprising:
when the reduction mode entry time is greater than the reference time, closing a sub-channel screen and displaying a main screen.

19. The broadcast reception method of claim 17, further comprising:
when the reduction mode entry time is greater than the reference time, powering-off adjacent RF processors other than an RF processor connected to an interface.

20. A broadcast reception method for simultaneously receiving multiple channels in a digital broadcasting system, the method comprising:
upon receiving a request for a multi-channel simultaneous reception mode from a user, enabling all of Radio Frequency (RF) processors associated with the multiple channels, and processing multi-channel audio/video data; and
upon receiving a channel scan end key, changing a view mode according to a relationship between a reduction mode entry time and a predetermined reference time.

21. The broadcast reception method of claim 20, further comprising:
when the reduction mode entry time is greater than the reference time, closing a sub-channel screen and displaying a main screen.

22. The broadcast reception method of claim 20, further comprising:
when the reduction mode entry time is greater than the reference time, powering-off adjacent RF processors other than an RF processor connected to an interface.
